# NEUE EUROPÄISCHE PATENTSCHRIFT

(11) **EP 0 667 081 B2**
(45) Veröffentlichungstag und Bekanntmachung des Hinweises auf die Entscheidung über den Einspruch: **13.02.2008**
(45) Hinweis auf die Patenterteilung: 16.07.1997
(21) Anmeldenummer: 94923634.3
(22) Anmeldetag: 25.08.1994
(51) Int. Cl.: H04N 5/445

(54) **ADRESSIERBARE SCHALTUNGSEINRICHTUNG**
ADRESSABLE CIRCUIT DEVICE
MONTAGE ADRESSABLE

(30) Priorität: 25.08.1993 CH 252093; 05.08.1994 CH 245094
(43) Veröffentlichungstag der Anmeldung: 16.08.1995
(73) Patentinhaber: TWIX EQUIPMENT AG, CH-8132 Egg b. Zürich (CH)
(72) Erfinder: REICHLIN, Roland, CH-8032 Zürich (CH); ZELLER, Mathias, CH-5426 Lengnau (CH)
(74) Vertreter: Frei, Alexandra Sarah
(86) Internationale Anmeldenummer: PCT/CH1994/000166
(87) Internationale Veröffentlichungsnummer: WO 1995/006389

(56) Entgegenhaltungen:
- EP-A- 0 536 828
- DE-A- 3 823 284
- US-A- 4 774 582
- SYMPOSIUM RECORD CABLE SESSIONS, 18TH INTERNATIONAL TELEVISION SYMPOSIUM AND TECHNICAL EXHIBITION, 10. Mai 1993, MONTREUX, CH Seiten 571 - 586 VITO BRUGLIERA 'Digital On-Screen Display - A New Technology for the Consumer Interface'
- LOEWE "Farbfernsehgerät Bedienungsanleitung: Arcada 72 / Art Vision 20 / Art Vision 630 / Art Vision 700", Nr. 1/9.93/3,0

## Beschreibung

Die Erfindung liegt auf dem Gebiet der Telekommunikation und betrifft eine Schaltungseinrichtung.

Bei der heutigen Vernetzung von Radio- und Fernsehkommunikation, insbesondere durch zusammenfassende Systeme (Kanäle) wie Satelliten- und Kabelübertragungen bzw. -service, hat es der Endbenützer, der eigentliche Adressat aller Anstrengung, nicht mehr leicht, sich mir dem geballten Angebot auseinanderzusetzen. Genau dies jedoch ist nicht nur unerwünscht, es ist auch unzumutbar. Wie soll sich ein Entspannung suchender TV-Konsument zwischen Dutzenden von Sendern und deren Programmen und dem Teletext und Programmankündigungen und anderen gutgemeinten Services zurechtfinden, wenn ihm nicht die adäquaten Mittel dazu geboten werden? Heute sind dies das gedruckte Programmheft, oft nicht aktuell, und die wesentlich anspruchsvollere, trotzdem aber sehr umständliche TV-Information via sendereigenen Teletext etc. die Mittel der Wahl. Ein Lösungsansatz zeigt die Schrift von B. Brugliera (Symposium Record Cable Sessions, 18th International Television Symposium And Technical Exhibition, Mai 1993, Seiten 571-586) auf, wo ein Computer Daten aus Datenbanken zusammenstellt und adressiert an Decodierer übermittelt. Die Decodierer können abrufbare Informationen laden. Informationen der Decodierer sind in Fernsehprogramme einblendbar. Einen anderen Lösungsansatz zeigt die Schrift -EP-A-0536828 auf, die einen Receiver mit zwei Tunern offenbart, wobei einer für den Empfang von Teletext-Informationen über einen Teletext-Decodierer, der andere für den Empfang von Fernsehprogrammen dient. Die Teletext-Informationen sind im Fernsehprogramm eingeblendet. Alle möglichen Lösungsansätze, wie Decodierer (zu eng auf den Anbieter ausgerichtet) oder Strichcode in Programmheften (nie richtig aktuell und nicht unkompliziert in der Anwendung) scheiterten an der geringen Akzeptanz durch den End-Anwender. Zur Zeit ist keine Lösung bekannt, die sich beim Publikum so richtig durchsetzen konnte.

Diesem Umstand abzuhelfen ist Ziel der Erfindung.

In der Folge wird eine Art TV- und Radio-Programm-Manager bzw. -Navigator diskutiert, der einem Vielseher und Vielhörer bei allen Ansprüchen, ständig zu wissen was läuft und ihm zugänglich ist, ein entspanntes, auf ihn abgestimmtes Sehen und Hören der Sendungen ermöglicht. Dazu ist eine erfinderisch zusammengestellte Schaltungseinrichtung nötig, welche den Programm-Manager in Form einer an das Fernsehgerät anschliessbaren Schaltungseinrichtung verkörpert.

Das System besteht im wesentlichen in der Verbindung eines Informations-Übermittlungsverfahrens aus einer eigenen Datenbank bzw. Kopfstation auf einen bevorzugten Fernsehsender, um in mindestens einem Zusatz- oder Nebeninformationskanal übermittelte Informationen auf Hauptinformationskanäle anzuwenden. Zum Empfang benötigt die Schaltungseinrichtung mindestens zwei oder mehr Tuner. Die Wahl der Tuner ist frei. Als Tuner kommen der Tuner eines Fernsehgeräts, eines Videorecorders, eines SAT-Receivers oder eines anderen Gerätes (Tuner-Computerkarte, etc.) oder aber auch ein Tuner oder einer von mehreren Tunern in der erfinderischen Schaltungseinrichtung selbst in Frage.

Eine Funktion der Schaltungseinrichtung ist das Empfangen und Einblenden von selbstproduzierten und anderen Zusatz- oder Nebeninformationen, hierzu verfügt sie über eine hard- und/oder softwaremässig realisierte Empfangsfunktion aus Zusatz- oder Nebeninformationskanälen (carrier channels). Softwaremässig ist diese Nebeninformationsfunktion ein Programm zur Aufnahme der zusatz- oder Nebeninformationen, hardwaremässig ist sie ein Tuner, der in diesem Fall als Nebeninformationstuner betrieben wird. Das ausgewählte Fernsehprogramm auf dem Hauptinformationskanal wird von einem Hauptinformationstuner übertragen. Der oder die anderen Tuner überprüft bzw. überprüfen oder überwacht bzw. überwachen ständig den oder die Nebeninformationskanal bzw. Nebeninformationskanäle mit den auf die Empfangsschaltung zugeschnittenen Informationen. Vorzugsweise geschieht dies über einen Teletext-Kanal (carrier-channels) der für dieses Angebot speziell betrieben wird. Man kann einem allfälligen dritten Tuner bzw. Programm für Nebeninformationen, eine weitere Aufgabe zuweisen, man kann bei zwei Tunern eine permanente Überwachung der Nebeninformationen durch den Nebeninformationstuner (watching tuner) und der permanente Empfang des Hauptinformationskanals durch den Hauptinformationstuner wechseln (flippen), doch wird hier von der Möglichkeit einer Multitunerbox die Ausführungsform mit zwei Tunern diskutiert.

Die Schaltungseinrichtung ist ausserdem einzeln adressierbar. Über einen Nebeninformationskanal können spezifische Informationen an eine bestimmte (numerierte) Schaltungseinrichtung gesendet werden. Eine solche individuell adressierte Schaltungseinrichtung erlaubt die Versendung eines oder mehrerer persönlichen Profile. Damit ist es möglich, Informationen wie die Übersicht über die aktuellen Sendungen, die Art der Sendungen (nur Sportsendungen, nur Spielfilme, etc.) individuell einzublenden. So kann je nach individuellem Zuschauerwunsch ein spezifische Nebeninformation, wie die Ankündigung einer Lieblingssendung "Achtung Rio Bravo beginnt in 5 min. im ersten Programm" etc. übermittelt werden. Des weiteren sind komplexe und aktuellste Einblendungen von bspw. auf anderen Kanälen übertragenen Sportveranstaltungen individuell möglich. So kann eine Nebeninformationseinblendung sofort, im jeweils gewählten Kanal erfolgen, sie kann aber auch erst beim Umschalten auf einen, eine solche Sportveranstaltung übertragenden Kanal erfolgen.

Die Zusatz- oder Nebeninformationen werden der Sendestation aus einem Zentralcomputer von der Datenbank eines Nebeninformationslieferanten zugespielt. Dies kann entweder in Realtime (sofortige Übertragung) oder im Batch-Modus geschehen. Die Zusatz- oder Nebeninformationen werden bspw. als digitale Daten über Modem vermittelt und in einen bestehenden TeletextInserter der Sendestation geladen und übermittelt.

Die Schaltung genannt, hat die Daten sämtlicher Radio- und/oder TV-Programme terrestrischer (Antenne, Kabel) oder Satelliten-Übertragung und sie hat andere (adressierbare) Informationen gespeichert. Schaltet der Benutzer auf einen anderen Kanal, erscheint an einer gewünschten Stelle auf dem Bildschirm eine Einblendung der Kurzinformation über die auf dem eingeschalteten Hauptinformationskanal laufende Sendung. Der Zeitpunkt und die Zeitdauer einer solchen Einblendung sind frei wählbar.

Als Option soll es möglich sein, mit einem kleinen Bild-in-Bild oder auf einem zweiten Monitor den bei Beginn einer unerwünschten Information (wegen der Werbung) verlassenen Kanal als Kleinmonitorbild in das Hauptbild einzublenden, damit der Benutzer auf diesem kleinen Bild verfolgen kann, wann er wieder auf den Kanal zurückschalten kann. Sobald dies der Fall ist, kann die Schaltung wieder automatisch auf den verlassenen Sender (Kanal) zurückschalten.

Die Schaltung soll auch ermöglichen, dass nur eine Fernbedienung für die gemeinsame Bedienung von Videorecorder, Fernseher und Satellitentuner verwendet werden kann. Lediglich für gerätespezifische Funktionen wie die Farbsättigung, der Kontrast und das Ein-/Ausschalten muss die zum Gerät gehörende Fernbedienung noch verwendet werden. Diese Möglichkeit ist interessant für Vielseher, die dadurch nicht mehrere Fernbedienungsgeräte bereithalten und bedienen müssen. Bei software-realisierten Lösungen können alle Funktionen auf eine Fernbedienung gelegt werden. Hierzu bietet sich die Benutzung der Original Fernseh-Fernbedienung an.

Beim Installieren der Schaltung könnte diese automatisch die ganze Sendereinstellung übernehmen, was für viele Käufer eine grosse Erleichterung wäre.

Die Schaltung soll auf Tastendruck sofort eine Übersicht über alle aktuell laufenden Sendungen auf sämtlichen Kanälen auflisten, ohne dass zwischen Kanälen geschaltet wird.

Ist ein Modem vorhanden, so kann die Schaltung per Tastendruck interaktives Fernsehen, wie beispielsweise Teleshopping oder Audiotext ermöglichen. Dann werden während des Fernsehkonsums auf Nebeninformationen vom Konsumenten Antwortinformationen über das Modem ausgesendet.

Eine erfindungsgemässe Lösung mit mindestens zwei Tunern ermöglicht während des Fernsehens eine simultane Überwachung anderer Kanäle. Eine eigene und bevorzugte Sende-Einheit (Carrier) sendet alle gewünschten und notwendigen Informationen, inkl. Programninformationen, über die Austastlücken oder die Tonkanäle etc., bspw. über Teletext. Beim Installieren der Schaltung können, wie oben schon angetönt, bspw. automatisch ganze Tabellen von stets aktuellen Sendereinstellungen für Radio und TV am Fernsehgerät via gespeicherte Daten in der Schaltung sichtbar gemacht und en bloc oder individuell an angeschlossenen Geräten vorgenommen werden.

Wenn man die Schaltung mit einem Decoder für die gängigsten Codierverfahren wie z.B. Eurocypt oder Videocrypt versieht, kann sie gleichzeitig als Decoder für TV-Stationen, die codiert senden, verwendet werden. Zweckmässig wäre dann der Einbau eines SMART-Card-Lesers. Die meisten Stationen sind dazu übergegangen, an Stelle des Decoders eine SMART-Card bzw. intelligente Chipkarten mit Code und Buchungsfunktion abgeben (eine solche SMART-Card wird dann in einen Norm-Decoder eingeschoben).

Werbespots und Spielfilme können codiert werden. Dazu wird unmittelbar nach dem Zeilenimpuls, am linken Bildrand, im technisch sichtbaren Bildbereich, ein heller oder dunkler Grauwert ganz kurz, bspw. in 1 µsec. abgetastet. Diese Codierung wird bei der Erstellung des Werbespots oder des Spielfilms hineinkopiert. Die Codierung geht je nach Fernsehnorm, bspw. über maximal 625 Bildzeilen, wovon vorteilhafterweise 256 Zeilen respektive 256 Bits benutzt werden. Damit ist eine fast unbeschränkte Codierung respektive Erkennung durch Zahlen oder Buchstaben oder Kombinationen von Zählen und Buchstaben möglich. Aufgrund der abgetasteten Codierung wird in der erfindungsgemässen Schaltung eine entsprechende, vorher übermittelte Zusatz- oder Nebeninformation geholt und auf dem Bildschirm angezeigt. Dadurch ist es möglich, bei der Ausstrahlung eines Werbespots oder eines Spielfilms Nebeninformationen mit der kürzestmöglichen Zeitdauer und weitgehend bildstörungsfrei zu übertragen.

Die erfindungsgemässe Schaltung benützt einen Nebeninformationstuner (watching oder controlling tuner) allein für den Carrier, das ist der Zusatz- oder Nebeninformationskanal und einen Hauptinformationstuner allein für den eingeschalteten Hauptinformationskanal, die beide zusammenarbeiten und die gemeinsam die oben diskutierte Grund-Funktion, d.h. die Bildung einer gemeinsamen Information ermöglichen. Zusätzliche Tuner (z.B. SAT-Rec) können weitere Funktionen dazu bringen. In einer optionalen Ausführungsformen ist ein Tuner auf der erfindungsgemässen Schaltung der Hauptinformationstuner und der Tuner des Fernsehers ist der Nebeninformationstuner. Die Schaltung kann mit einer eigenen, speziell angepassten Fernbedienung betrieben werden. Die Schaltung besitzt in diesem Falle einen von aussen für Infrarotstrahlen zugänglichen Infrarotempfänger zum Empfang der Steuersignale.

Aufgrund der permanenten Überwachung des Hauptinformationstuners ist eine sogenannte pay-per-view Funktion (kurz PPV) oder auch eine Media-Control realisierbar, d.h. es kann eine Kontrolle erfolgen, welcher Fernsehbenützer wann und wie lange welchen Kanal konsumiert hat. TV-Sender geben bereits heute Smart-Cards heraus, welche gegen eine bestimmte Gebühr (wie Telefonkarten) bezogen werden können. Meistens handelt es sich dabei um Abonnementsfernsehen, also ein bestimmter Geld-Betrag für eine bestimmte Zeitperiode. Die Smart-Cards sind heute auch mit read/write-Funktion erhältlich (Telefonkartenj, sodass eine echte Buchungmöglichkeit besteht, die durch die Schaltung bewerkstelligt werden kann, da die nötigen Funktionen abzweigbar sind. So kann die Schaltung für jeden Sender eine separate Abrechnung erstellen, da die "Fernsehzeit" für jeden Sender protokolliert und ausgenützt werden kann. Es kann Mediaforschung betrieben werden, da die Einschaltzeiten des jeweiligen Benützers bekannt ist.

Über eine Schnittstelle, bspw. RS-232 kann die Schaltung an einen PC oder über ein Modem an einen Zentralcomputer angeschlossen werden, was einen interaktiven Betrieb mit der Schaltung ermöglicht. So können über den Sender Computerprogramme gesendet werden, die in der Schaltung gespeichert und vom PC abgerufen werden können. Auf diese Weise ist die Schaltung mit einem bestehende Netzwerk verbunden. Ist ein Modem vorhanden, so kann die Schaltung über die Schnittstelle per Tastendruck interaktiv Wirken, so sind dann beispielsweise Teleshopping, elektronische Spiele oder Audiotext möglich. So sind Teleshopping-Einblendungen ins aktuelle Fernsehbild des Hauptinformationskanals wie bspw. "Kaufen Sie die Krawatte, die Beni Turnherr gerade trägt" möglich. Solche Teleshopping-Einblendungen können individuell erfolgen, sie können bspw. auf der Basis aktueller Mediaforschungsergebnissen oder abgespeicherter persönlicher Profile an bestimmte Zielgruppen gerichtet werden.

Die Schaltung bietet eine interessante Möglichkeit für eine äusserst einfache Videorecorderprogrammierung, das Sorgenkind der Branche deswegen, weil sich Dreiviertel der Bevölkerung mit dieser Materie nicht auseinandersetzen mag und/oder kann. Über einen zusätzlichen Videoausgang im TV oder SAT-Receiver, kann der Videorecorder mit "Programrnierdaten" gespiesen werden, die aus dem diskutierten Informationspool (ein Speicher für bereitzustellende Programmdaten oder andere Informationen) kommt, welcher durch den überwachenden Nebeninformationstuner eingesammelt und dort abgelegt wird.

Der Käufer eines Videorecorders oder der Besitzer eines solchen muss lediglich noch ein einziges Mal eine Zeitangabe in eine repetitive Funktion, wie bspw. die Funktion "daily" oder "weekly", eingeben, damit der Recorder sich ein- oder ausschaltet. Dies muss lediglich einmal bei Inbetriebnahme erfolgen. Dann können auf dem TV-Bildschirm die Programm-Informationen aus dem Pool als Menu eingeblendet werden. Das Menu kann wie bei graphischen Bildschirmoberflächen von Personalcomputern bekannt, mehrere Untermenus aufweisen. Au diese Art und Weise können zur Bedienung der Menus die vorhandenen Fernbedienungen am Fernsehgerät oder am Videorecorder usw. benutzt werden. Die Informationen werden dann in der Schaltung gespeichert und zur entsprechenden Zeit wird das entsprechende Signal dem Videorecorder von der Schaltung her übermittelt, und zwar in diese Funktion DAILY oder WEEKLY. Diese DAILY- oder WEEKLY-Funktion wird durch das feature in der Schaltung simuliert. Damit ist es möglich, mit dem geringstmöglichen Aufwand unterschiedliche Sendungen unterschiedlichster TV-Stationen auf dem Videorecorder zu programmieren. Dies immer auch unter Verwendung des VPS-Signals und mit oder ohne erfindungsgemässe Schaltung.

Dieselbe Möglichkeit besteht auch bei einem Satellitenreceiver mit zusätzlichem Überwachungstuner.

Ein Kanalwähl-Durchgang bei Teletext dauert ungefähr 25 Sekunden, während dieser Zeit kann die gesamte Information aller Seiten aufgenommen und können die für die Schaltung relevanten Daten abgespeichert werden oder es kann, was viel effizienter ist, ein Informations-Pool Seitenangebot mit ausgewählten bspw. Programminformationen, das wäre der als Sammelbecken sich zu denkende Informationspool, angewählt und dessen Information bspw. in einen Fussbalken in das TV-Bild eingeblendet werden. Die aktualisierung geschieht unmittelbar und stets, da der überwachende Nebeninformationstuner (watching oder controlling tuner) ständig aktiv den Nebeninformationskanal überwacht. Trotzdem ist es auf dem Umweg über den Informationspool möglich, während des Ansehens eines Programms und damit beim Verharren auf einem Hauptinformationskanal Informationen über andere Kanäle zu erfassen und einzublenden.

Der Zugriff auf Zusatz- oder Nebeninformation ist in frei bestimmbarer Folge möglich. Beim Umschalten des Tuners auf einen anderen Kanal, bei jedem VPS-Wechsel, bei jedem kurzem Unterbruch, wechselt die Schaltung den Tuner innert Sekundenbruchteile kurz auf den Nebeninformaltionskanal, das ist der eigene Carrier mit den speziell aufbereiteten Daten, sodass die dort vorhandenen Nebenformationen durch den Mikroprozessor übernommen und im Speicher abgelegt werden. Auf diese Art und Weise wird eine intelligente Aktualisierung durchgeführt, diese neuen Nebeninformationen können dann wieder in die Einblendung im Bild eingegeben werden.

Das Programm des Mikroprozessors für die Steuerung der gesamten Funktionen der Schaltung wird bspw. in einem EEPROM abgelegt. Vorteilhafterweise sieht man vor, dass die Parameter jeweils verändert werden können. Im EEPROM ist das leicht möglich, da der Inhalt, das ist unter anderem das Steuerprogramm, über den eigenen Carrier neu geladen oder verändert werden kann.

Anhand der nachfolgend aufgeführten Figuren wird je eine Ausführungsform der Erfindung nun im Detail diskutiert.
- Fig. 1: zeigt ein Prinzipschema zur Darstellung des erfindungsgemässen Verfahrens. Gezeigt ist eine Kopfstation, von der die Zusatz- und Nebeninformationen zu einem Inserter gegeben werden, von wo aus über einen Sender diese Informationen in der Austastlücke zum Verbraucher gesendet werden.
- Fig. 2: zeigt ein beispielsweises Prinzipschema zur Durchführung des Verfahrens, bei der die erfindungsgemässe Schaltung über zwei SCART-Anschlussgruppen an einen Hauptinformationstuner eines Fernsehgeräts und an einen Nebeninformationstuner eines Video-Recorders angeschlossen ist.
- Fig. 3: zeigt das Prinzip einer optional zu verwendenden Codierung, wo von der Schaltung unmittelbar nach dem Zeilenimpuls ein heller oder dunkler Grauwert abgetastet wird.

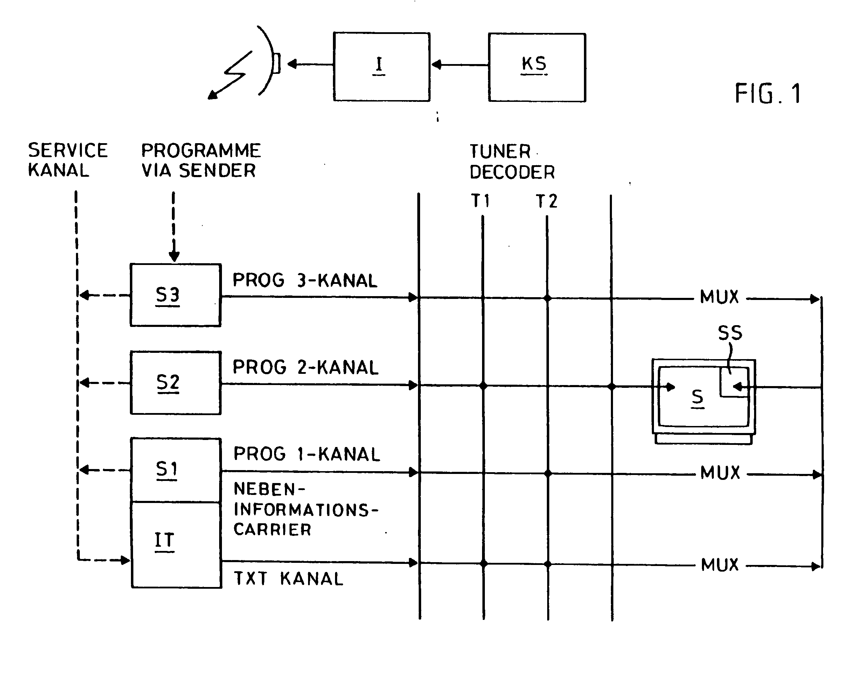

**Figur 1** zeigt das Prinzip des verfahrensmässigen Teils der Erfindung. In einer Kopfstation KS, bspw. ein PC oder ein anderer Rechner mit einer Datenbank, welche sämtliche Informationen und Daten enthält, die als Nebeninformation in die Hauptinformation eingeblendet werden sollen, bspw:
- Fernsehprogramminformationen, aufbereitet gemäss den Erfordernissen der Empfängerschaltung,
- Alle weiteren Informationen, die über den Carrier an die Schaltungen gemäss Erfindung gesendet werden sollen,
- Alle relevanten Daten aller in Gebrauch stehenden Schaltungen mit deren Nummer, Adresse des Inhabers, persönliche Profile etc.
- Das Mikroprozessorprogramm und Parameter der Schaltung, das bei Bedarf gesendet wird, damit die Schaltung beim Benützer (z.B. ein EEPROM) modifiziert werden kann. Die Schaltung kann über die Kopfstation beispielsweise auch gesperrt werden, falls dies vom Betreiber des Systems als nötig befunden wird.

Diese Daten werden in der Kopfstation mit einem eigenen Programm editiert, überwacht, verwaltet und entweder direkt oder über Modemverbindung an den Inserter I, hier der Teletextinserter des entsprechenden, für diesen Zweck zur Verfügung stehenden Carriers (Fernsehsender) übermittelt, wo sie dann in die "normalen" Teletextinformationen eingemischt und zusammen mit dem Bild ausgestrahlt werden. Die erfindungsgemässe Schaltung trennt dann die zu speichernden Daten (Informationen) von den übrigen Informationen und speichert sie im Speicher der Schaltung ab.

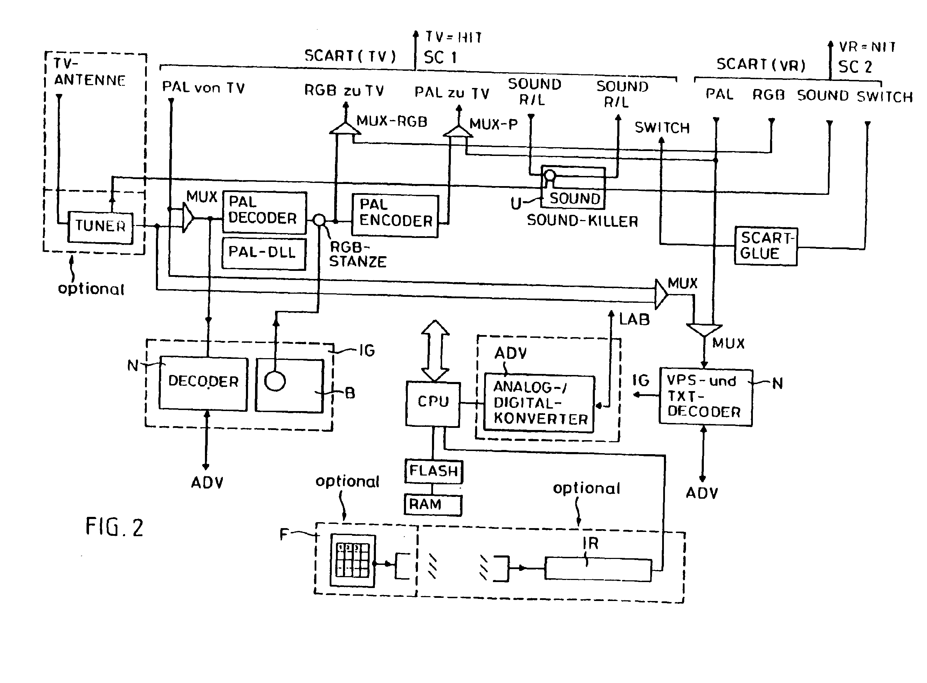

Über eine Anzahl Sender S1, S2, S3, .... Sn sowie über einen Informationskanal IT werden die Programme der Sender und auch die Informationen aus der Kopfstation dem'Zuschauer zugänglich gemacht. Die eingezeichneten Informationspfade entsprechen hier nicht den Signalpfaden, diese werden in der Schaltung von Figur 2 gezeigt. Die bspw. Verknüpfung bzw. Funktion ist durch ein Netz mit Knoten dargestellt. Die Verknüpfung geschieht über (hier) zwei Tuner T1 und T2. Tuner T1 überträgt das Programm des Hauptinformationskanals S2 auf den Bildschirm des Fernsehers S, das ist das Programm, das der Zuschauer eben anschaut. Der Tuner T2 ist auf den bestimmten Kanal eingestellt, welcher die Zusatz- oder Nebeninformationen durch die Austastlücke (bspw. VTX in Deutschland, TXT in der Schweiz) auf einen Multiplexer MUX leitet, um sie in einem eingeblendeten Teilbildschirm SS (sub screen) oder auch im Hauptbildschirm abzubilden oder in der Schaltung zu speichern.

Als Carrier wird hier bspw. der Fernsehsender S1 benützt, der, die schaltungsgerechte Zusatz- bzw. Nebeninformation aus der Kopfstation in der Austastlücke mitführend, den Informationskanal IT mit der in der Schaltung zu speichernden Information beschickt.

**Figur 2** zeigt ein Beispiel für ein Prinzipschaltungsschema zur Durchführung des Verfahrens, bei der die erfindungsgemässe Schaltung über zwei durchgeschlaufte SCART-Anschlussgruppen SC1 und SC2 einerseits an einen Hauptinformationstuner HIT, hier ein Fernsehgerät TV und andererseits an einen Nebeninformationstuner NIT, hier ein Video-Recorder VR, angeschlossen ist. Die Anschlusstellen am SCART sind zum besseren Verständnis mit ihrer eigentlichen Funktion bezeichnet, PAL von TV für das Signal aus dem TV-Tuner, RGB zu TV für das einzublendende Nebeninformationssignal, PAL von Videorecorder für das Signal aus dem Videotuner usw. Selbverständlich ist diese Schaltung nicht auf die PAL-Norm des diskutierten Beispiels eingeschränkt, sie kann analog zur erfinderischen Lehre auf irgendwelche Norm ausgelegt sein.

Diese Schaltung kann einen eigenen Tuner (optional) haben, sie benötigt ihn aber nicht. Der oder die Tuner befindet bzw. befinden sich gemäss Beispiel in peripheren Geräten mit eigenem Tuner, also im Fernsehgerät und/oder im Video-Recorder. Die erfindungsgemässe Schaltung kann natürlich auch in einem Gerät, welches schon einen Tuner integriert hat, bspw. im Fernsehgerät oder im Video-Recorder eingebaut sein; sie kann aber auch extern als standalone Gerät ausgeführt sein.

Das hier gezeigte Schaltungsbeispiel besteht, im wesentlichen aus folgenden Funktionsteilen:
- aus einem TV-Decoder (PAL) und TV-Encoder (PAL) für die Hauptinformation,
- je einem VPS- und Teletextdecoder an den SCART-Anschlussgruppen SC1 und SC2 für die Nebeninformation,
- einem Bildgenerator, wobei dieser und die Decoder für die Hauptinformation aus dem Hauptinformationstuner HIT einen Informationsgenerator IG zur Einblendung der Nebeninformationen bilden,
- aus einem "Verbinder" für die beiden SCART-Anschlussgruppen (scart glue) zum Durchschlaufen der Information von einer Gruppe zur anderen,
- eine Funktion U zur Beeinflussung der Lautstärke und des Bildes für einen doppeltverwendeten Kanal, bspw. der Menukanal, mit welcher das gesendete Programm dieses Kanals temporär unterdrückt wird, mit andern Worten,
- aus einer programmierbaren Steuereinheit mit einem Mikroprozessor CPU und Speicher RAM

optional kann man noch einen A/D-Wandler für eine Codierabtastung bzw. Zuordnungserkennung im Fernsehbild (label code) vorsehen. Falls gewünscht, kann optional auch einen schaltungseigener Tuner zur ständigen und zusätzlichen Aufnahme der Nebeninformation in den Speicher sowie eine für den Zweck der Handhabung von Nebeninformation abgestimmte Fernbedienung mit Empfänger für die Signale aus dieser Fernbedienung eingesetzt werden (diese Option benützt also nicht die Fernbedienung des Fernsehgeräts).

Die Schaltung ist also eine Schaltung zum Sammeln von adressierter Zusatz- oder Nebeninformation aus einer eigenen Kopfstation über einen eigenen Sendekanal und, falls gewünscht mittels einem A/D-Konverter auch zur Überwachung einer Hauptinformation bezüglich eines gesendeten, einer adressierten Nebeninformation entsprechenden Codes und zur Verknüpfung einer bestimmten Nebeninformation mit einer bestimmten Hauptinformation, mit je einem Bild-De- und Encoder (PAL) für die Hauptinformation, mit ein oder zwei Decodern (N) für Nebeninformation, einem Bildgenerator (B) für die Einblendung von Nebeninformation in die Hauptinformation, mit einer Teilschaltung (U) zur Beeinflussung von Bild/Ton, optional mit einem Analog/Digital-Konverter (ADV) zur Abtastung eines Zuordnungscodes (LAB) in der Hauptinformation und mit einer digitalen Steuerung (CPU) mit Speichermitteln (RAM) zur Speicherung, Adressvergleich und Ausgabe von Nebeninformation.

Die Funktionsweise dieser Schaltung wird nun anschliessend diskutiert.

Die Schaltung benötigt, wie gesagt, nicht zwingend einen eigenen Tuner, sie benötigt auch keine spezielle Fernbedienung, weswegen diese beiden Funktionselemente in gestrichelten Umrandungen als optional bezeichnet sind. Nach Bedarf kann eine entsprechend erweiterte Ausführungsform mit eigenem Tuner und speziell abgestimmter Fernbedienung vorgesehen werden. Die erfindungsgemässe Schaltung kann am TV-SCART-Anschluss über das VPS-Signal und/oder die Teletext-Information erkennen, welchen Kanal der TV-Benützer eingestellt oder auf welchen Kanal er umgeschaltet hat und sie kann die über den Haupt- oder Nebentuner übertragenen und gespeicherten Zusatz- oder Nebeninformationen in die Hauptinformationen auf dem Fernsehschirm einblenden. Da die hier diskutierte Ausführungsform der Schaltung nicht über eine eigene Fernbedienung verfügt, muss die Schaltung in der Lage sein, den vom Fernsehbenützer eingestellten Kanal zu erkennen, was über eine Kanalerkennung geschieht. Diese Kanalerkennung kann mittels VPS- und/oder TXT-Informationen am TV-SCART-Anschluss erfolgen. Durch Doppelverwendung einzelner, frei wählbarer Kanäle wird eine in den Fernsehschirm eingeblendete Menufunktion ermöglicht. Unter Doppelverwendung ist folgendes gemeint: Einer der Kanäle wird vorübergehend für den Zweck der Einblendung der Menu-Funktion sozusagen fremdbestimmt. Dazu kann das Programm dieses Kanals (Bild und Ton) durch Einschalten der Funktion U zur Beeinflussung von Ton/Bild ausgeblendet werden (bspw. ist Kanal 1, an der Fernbedienung F die Taste 1, die Taste zum Abrufen des Menus). Ist das Menu eingeblendet, dann weiss die Schaltung, dass ein weiteres Betätigen von Tasten der Fernbedienung zur Anwahl von Untermenus im Hauptmenu gilt. So können für das Untermenu bspw. die Tasten 2 bis 5 spezielle Informationen abrufen wobei statt des "gewohnten" Senders vom Speicher der Schaltung ausgegebene Information auf dem Bildschirm erscheint. Die Funktion zur Beeinflussung von Ton/Bild, die Unterdrückerschaltung, unterdrückt währenddessen die Ausgabe des angestammten Senders auf den Bildschirm.

Die in den Speicher zu ladende Information wird über die Austastlücke der Bildsteuerung eingebracht, bspw. über Teletext. Entweder geschieht dies über den gleichen Tuner, mit dem man den eingestellten Sender empfängt, oder über einen Nebentuner, bspw. der im Videorecorder.

Ist der den watching tuner enthaltende Videorecorder ausgeschaltet oder gerade durch Bildaufzeichnung besetzt, so kann die Schaltung als Eintunerlösung (Tuner im Fernseher) programmgesteuert bei z.B. VPS-Signalen, Kanalwechseln des TV-Benützers, kurzen Filmunterbrechungen etc. zwischen den Funktionen Haupttuner oder Nebentuner umschalten. Die automatische Anwahl des Nebeninformationskanals, das Einlesen der Nebeninformationen und das Rückwählen eines Hauptinformationskanals erfolgt über eine Mikroprozessorsteuerung CPU/RAM.

Ist der Video-Recorder aber verfügbar, so funktioniert sein Tuner als "watching tuner", der die Nebeninformationskanäle empfängt. Die Informationen kommen über die SCART-Anschlussgruppe SC2 "Videorecorder" in die Schaltung respektive über den AD-Wandler in deren Speicher RAM von wo sie gemäss dem bereits beschriebenen Verfahren in das Bild eines Hauptinformationskanals im Fernsehschirm eingeblendet werden.

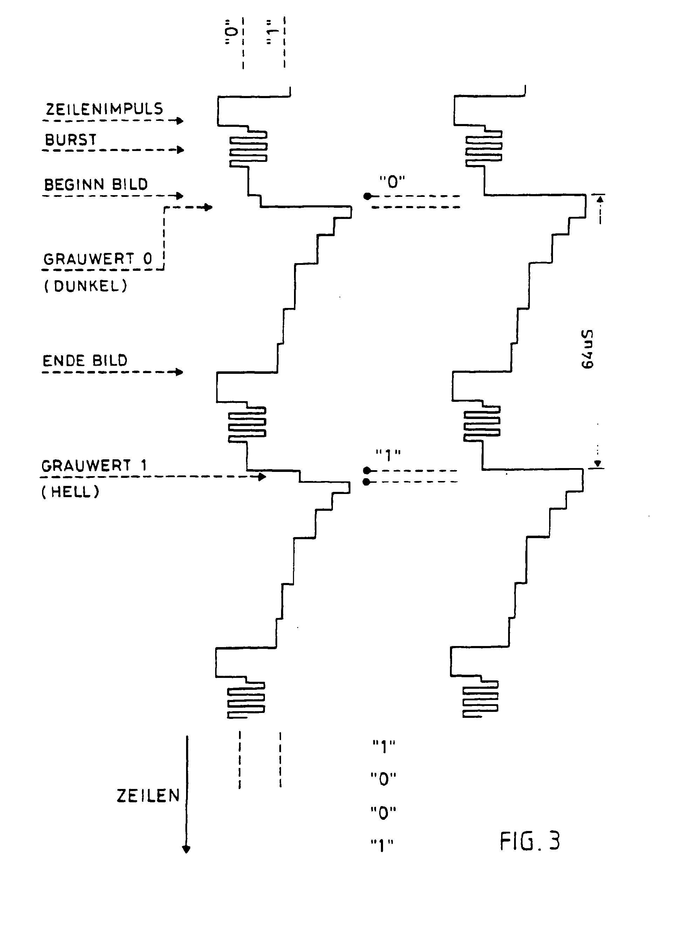

**Figur 3** zeigt in einem Diagramm, wie Werbespots, Spielfilme etc. codiert bzw. durch die erfindungsgemässe Schaltung erkennbar gemacht werden können, damit im gewünschten Moment die zugedachte Nebeninformation abrufbar ist und eingeblendet werden kann.

Unmittelbar nach dem Zeilenimpuls, am linken Bildrand, im technisch sichtbaren Bildbereich, wird ein heller oder dunkler Grauwert ganz kurz, bspw. von 1 µsec Dauer, abgetastet. Dies ist die Basis einer Codierung LAB (label). Diese Codierung bzw. Grauwert muss bei der Erstellung des Werbespots oder des Films gemäss den Vorgaben für die Abtastung durch die erfindungsgemässe Schaltung als Label in den Film kopiert werden und dient während der Sendung als Erkennung. Die Codierung kann sich je nach Fernsehnorm bspw. über maximal 625 Bildzeilen erstrecken, wovon vorteilhafterweise 256 Zeilen respektive computergerechte 256 Bits benutzt werden. Damit ist eine fast unbeschränkte Anzahl von Codierungen respektive Erkennung durch Zahlen oder Buchstaben oder Kombinationen von Zahlen und Buchstaben möglich. Diese Codierung LAB wird von der erfindungsgemässen Schaltung erkannt. Aufgrund der abgetasteten Codierung wird in der Schaltung eine vorher gespeicherte und dazu korrespondierende Nebeninformation (bspw. die aktuellsten Detailangaben zu dieser Information) aus dem Speicher abgerufen und auf dem Bildschirm angezeigt, also in die Hauptinformation eingeblendet. Dadurch ist es möglich, bei der Ausstrahlung eines Werbespots oder eines Spielfilms dazugeordnete Nebeninformationen in der kürzestmöglichen Zeitdauer und weitgehend bildstörungsfrei zu übertragen. Die Nebeninformation wird, wie oben schon erwähnt, über eine Kopfstation, welche die Austastlücken des gesendeten Bildes benützt, bspw. über eine Teletextseite, in den Speicher der erfindungsgemässen Schaltung übertragen und dort für den gezielten Gebrauch abgelegt. Mit einem ständig eingeschalteten "watching tuner" geschieht diese Uebertragung der Nebeniformation in den Speicher unabhängig von der Art und Weise, wie vom Fernseher konsumiert wird, der Speicherinhalt ist immer aktuell.

## Patentansprüche

1. Schaltungseinrichtung
- mit einem Gerät mit Tuner, welcher als Hauptinformationstuner (T1) zum Empfang eines TV-Programms verwendet wird und
- mit einem weiteren Gerät mit Tuner, welcher als Nebeninfonnationstuner (T2) zum Empfang von Nebeninformationen verwendet wird,
- welche Nebeninformationen in einer Kopfstation (KS) erstellt, auf einen TV-Sender übertragen und vom Nebeninformationstuner (T2) empfangen werden,
**dadurch gekennzeichnet,**
- **dass** die Schaltungseinrichtung individuell adressierbar ist,
- **dass** das vom Hauptinformationstuner (T1) empfangene TV-Programm an SCART-Anschlüssen abgreifbar ist,
- **dass** die vom Nebeninformationstuner (T2) empfangenen Nebeninformationen an SCART-Anschlüssen abgreifbar sind,
- **dass** eine Schaltung mit einer digitalen Steuerung (CPU), mit einem Decoder (N) zur Decodierung von an die Schaltung adressierten Nebeninformationen, mit einem Speicher (RAM) zur Speicherung von Nebeninformationen, mit einem Bildgenerator (B) für die Einblendung von den individuell an die Schalltungseinrichtung adressierten Nebeninformationen in das TV-Programm vorgesehen ist, dass die Schaltung mit SCART-Anschlussgruppen (SC1) für die Signale des Hauptinformationstuners (T1) und mit SCART-Anschlussgruppen (SC2) für die Signale des Nebeninformationstuners (T2) kontaktiert ist,
- **dass** die Schaltung vom Nebeninformationstuner (T2) empfangene Nebeninformationen über die SCART-Anschlussgruppe (SC2) in den Speicher (RAM) einliest,
- **dass** die Schaltung ein vom Hauptinformationstuner (T1) empfangenes TV-Programm durch Bestimmung von dessen VPS-Signal oder von dessen Teletext-Informationen über die SCART-Anschlussgruppe (SC1) erkennt
- und gespeicherte Nebeninformationen in das erkannte TV-Programm einblendet.

2. Schaltungseinrichtung gemäss Anspruch 1, **dadurch gekennzeichnet, dass** der Nebeninformationstuner (T2) ein Videorecorder-Tuner oder ein TV-Tuner ist.

3. Schaltungseinrichtung gemäss Anspruch 1, **dadurch gekennzeichnet, dass** der Nebeninformationstuner (T2) ein Tuner der Schaltung ist.

4. Schaltungseinrichtung gemäss einem der Ansprüche 1 bis 3, **dadurch gekennzeichnet, dass** der Nebeninformationstuner (T2) adressiert in einer Austastlücke gesendete Nebeninformationen empfängt.

5. Schaltungseinrichtung gemäss einem der Ansprüche 1 bis 4, **dadurch gekennzeichnet, dass** die Schaltung mit einer Fernbedienung eines TV-Geräts oder eines Videorecorders betreibbar ist.

6. Schaltungseinrichtung gemäss einem der Ansprüche 1 bis 5, **dadurch gekennzeichnet, dass** die Nebeninformationen als kleines Bild in das augenblicklich empfangene TV-Programm einblendbar sind.

7. Schaltungseinrichtung gemäss einem der Ansprüche 1 bis 6, **dadurch gekennzeichnet, dass** die Schaltung beim Installieren automatisch die Einstellungen aller Sender übernimmt und auf Tastendruck eine Übersicht aller aktuell laufenden Sendungen auf sämtlichen Sendekanälen auflistet.

8. Schaltungseinrichtung gemäss einem der Ansprüche 1 bis 5, **dadurch gekennzeichnet, dass** nebst einem gewählten Nebeninformationskanal (S1) ein weiterer Sendekanal oder mehrere weitere Sendekanäle aus der Mehrzahl von Senderkanälen zur Einblendung einer Menufunktion mit Menupositionen zum gezielten Abrufen von Nebeninformationen aus dem Speicher bestimmt ist, wobei die empfangene/n Sendung/en dieses Sendekanals oder dieser Sendekanäle unterdrückt und an deren Stelle das Menu einblendbar sind.

9. Schaltungseinrichtung nach Anspruch 8, **dadurch gekennzeichnet, dass** für die Menufunktion ein frei wählbarer Sendekanal und für jede Menuposition ein frei wählbarer Sendekanal temporär belegt ist, wobei der Aufruf von Menu und Menupositionen über die entsprechenden Kanalwahl-Tasten einer Fernbedienung erfolgt.

## Claims

1. Circuit device having a mechanism with a tuner, which is used as the main information tuner (T1) for receiving a TV programme and having a further mechanism with tuner, which is used as the secondary information tuner (T2) for receiving secondary information, said secondary information being produced in a head station (KS), transmitted to a TV transmitter and received by the secondary information tuner (T2), **characterized in that** the circuit device is individually addressable, that the TV programme received by the main information tuner (T1) can be tapped at SCART terminals, that the secondary information received by the secondary information tuner (T2) can be tapped at SCART terminals, that a circuit with a digital control (CPU), with a decoder (N) for decoding secondary information addressed to the circuit, with a memory (RAM) for storing secondary information, with an image generator (B) for fading of the secondary information addressed individually to the circuit device into the TV programme is provided, that the circuit is contacted with SCART terminal groups (SC1) for the signals of the main information tuner (T1) and with SCART terminal groups (SC2) for signals of the secondary information tuner (T2), that the circuit reads secondary information received from the secondary information tuner (T2), via the SCART terminal group (SC2), into the memory (RAM), that the circuit recognises a TV programme received from the main information tuner (T1) by determining its VPS signal or its teletext information by means of the SCART terminal group (SCI) and fades stored secondary information into the detected TV programme.

2. Circuit device according to claim 1, **characterized in that** the secondary information tuner (T2) is a video recorder tuner or a TV tuner.

3. Circuit device according to claim 1, **characterized in that** the secondary information tuner (T2) is a tuner of the circuit.

4. Circuit device according to one of the claims 1 to 3, **characterized in that** the secondary information tuner (T2) receives transmitted secondary information addressed in a blanking interval.

5. Circuit device according to one of the claims 1 to 4, **characterized in that** the circuit can be operated with a remote control of a TV set or a video recorder.

6. Circuit device according to one of the claims 1 to 5, **characterized in that** the secondary information can be faded in the form of a small image into the instantaneously received TV programme.

7. Circuit device according to one of the claims 1 to 6, **characterized in that**, on installation, the circuit automatically takes over the settings of all the transmitters and on key depression lists a survey of all presently running transmissions on all the transmission channels.

8. Circuit device according to one of the claims 1 to 5, that apart from a selected secondary information channel (S1), a further transmission channel or several further transmission channels is determined from the plurality of transmission channels for fading in a menu function with menu positions for the planned polling of secondary information from the memory, the received transmission or transmissions of said transmission channel or channels being suppressed and the menu is faded in in place thereof.

9. Circuit device according to claim 8, **characterized in that** for the menu function a freely selectable transmission channel and for each menu position a freely selectable transmission channel is temporarily occupied, the polling of the menu and menu positions takes place by means of the corresponding channel selection keys of a remote control.

## Revendications

1. Circuit comportant un appareil doté d'un syntoniseur qui est utilisé comme syntoniseur d'informations principales (T1) pour la réception d'un programme TV, et avec un deuxième appareil doté d'un syntoniseur qui est utilisé comme syntoniseur d'informations secondaires (T2) pour la réception d'informations secondaires, lesquelles informations secondaires sont produites dans une station de tête (KS), transmises à un émetteur TV et reçues par le syntoniseur d'informations secondaires (T2), **caractérisé en ce que** le circuit est adressable individuellement, **en ce que** le programme TV reçu par le syntoniseur d'informations principales (T1) peut être récupéré sur des connexions SCART, **en ce que** les informations secondaires reçues par le syntoniseur d'informations secondaires (T2) peuvent être récupérées sur des connexions SCART, **en ce qu'**il est prévu un circuit doté d'une commande numérique (CPU), d'un décodeur (N) pour le décodage des informations secondaires adressées au circuit, d'une mémoire (RAM) pour le stockage d'informations secondaires, d'un générateur d'images (B) pour l'incrustation d'informations secondaires adressés individuellement au circuit dans le programme TV, **en ce que** le circuit est mis en contact avec des groupes de connexion SCART (SCI) pour les signaux du syntoniseur d'informations principales (T1) et avec des groupes de connexion SCART (SC2) pour les signaux du syntoniseur d'informations secondaires (T2), **en ce que** le circuit écrit des informations secondaires reçues par le syntoniseur d'informations secondaires (T2) dans la mémoire (RAM) par l'intermédiaire du groupe de connexion SCART (SC2), **en ce que** le circuit reconnaît un programme TV reçu par le syntoniseur d'informations principales (T1) en déterminant le signal VPS de celui-ci ou les informations télétex de celui-ci par l'intermédiaire du groupe de connexion SCART (SCI) et incruste dans le programme TV reconnu des informations secondaires stockées.

2. Circuit selon la revendication 1, **caractérisé en ce que** le syntoniseur d'informations secondaires (T2) est un syntoniseur vidéo ou un syntoniseur TV.

3. Circuit selon la revendication 1, **caractérisé en ce que** le syntoniseur d'informations secondaires (T2) est un syntoniseur du circuit.

4. Circuit selon l'une ou l'ensemble des revendications 1 à 3, **caractérisé en ce que** le syntoniseur d'informations secondaires (T2) reçoit des informations secondaires adressées émises pendant un intervalle de suppression.

5. Circuit selon l'une ou l'ensemble des revendications 1 à 4, **caractérisé en ce que** le circuit peut être commandé par une télécommande d'un téléviseur ou d'un magnétoscope.

6. Circuit selon l'un e ou l'ensemble des revendications 1 à 5, **caractérisé en ce que** les informations secondaires peuvent être incrustées sous la forme d'une petite image dans le programme TV reçu à ce moment-là.

7. Circuit selon l'une ou l'ensemble des revendications 1 à 6, **caractérisé en ce que** le circuit reprend automatiquement, lors du montage, les réglages de tous les émetteurs et fait apparaître lors de 1 ' actionnement d'une touche toutes les émissions en cours sur tous les canaux d'émission.

8. Circuit selon l'une ou l'ensemble des revendications 1 à 5, **caractérisé en ce qu'**outre un canal d'informations secondaires (SI) sélectionné, un autre canal d'émission ou plusieurs autres canaux d'émission sont déterminés à partir de la pluralité de canaux d'émission pour l'incrustation d'une fonction de menu avec des 30 positions de menu pour l'appel sélectif d'informations secondaires à partir de la mémoire, la ou les émissions reçues sur ce canal d'émission ou ces canaux d'émission étant neutralisées et le menu étant incrusté à sa place.

9. Circuit selon la revendication 8, **caractérisé en ce qu'**un canal d'émission pouvant être sélectionné à volonté est occupé temporairement pour la fonction de menu et un canal d'émission pouvant être sélectionné à volonté est occupé temporairement pour chaque position du menu, l'appel du menu et des positions du menu étant réalisé par les touches de sélection de canal correspondantes d'une télécommande.
